# EUROPEAN PATENT SPECIFICATION

(11) **EP 1 645 849 B1**
(45) Date of publication and mention of the grant of the patent: **03.12.2014**
(21) Application number: 04023821.4
(22) Date of filing: 06.10.2004
(51) Int. Cl.: G01C 21/34, G08G 1/0968

(54) **Vehicle navigation system for calculating a route to a destination**
Fahrzeugnavigationssystem zur Berechnung einer Route zu einem Zielort
Système de navigation pour véhicule destiné à calculer une route vers une destination

(43) Date of publication of application: 12.04.2006
(73) Proprietor: Alpine Electronics, Inc., Tokyo (JP)
(72) Inventor: Olivella, Ester, 70567 Stuttgart (DE); Barota, Ovidiu, 70567 Stuttgart (DE)
(74) Representative: Klunker . Schmitt-Nilson . Hirsch

(56) References cited:
- EP-A- 0 756 153
- EP-A- 1 387 145
- GB-A- 2 394 346
- US-A- 5 892 463
- US-A- 6 061 630

## Description

### Field of the Invention

This invention relates to a navigation system for calculating a route from a present vehicle position to a destination. In particular, it relates to a navigation system which can acquire traffic information and calculate an optimized route based on information about existing, emerging and disappearing traffic events. The navigation system of the present invention uses a method for ignoring irrelevant traffic information to optimally utilize the systems processing capabilities and avoid unnecessary route calculations.

### Description of the Related Art

Navigation systems of the prior art detect the present position of a vehicle and based on map data, which is stored within the system, calculate a route to a destination. Some of these systems have the ability to acquire traffic information from a traffic information provider. When the system receives information about a traffic event, such as a traffic jam, road work, or the like, it compares the traffic information to the calculated route. If the traffic event is located on the calculated route, the system will then calculate an alternative route. Some systems also process traffic information about traffic events, which have disappeared. A disappeared traffic event may cause the system to calculate again the first route. For the system to find the optimal route, a "cost" is assigned to a particular traffic event. The cost is proportionate to the delay or additional traveling time, which will expectedly be caused by the traffic event. The system calculates the route with the lowest cost. This calculation of new routes based on acquired traffic information is also known as dynamic route guidance (DRG).

Traffic information can be provided by commercial traffic information providers such as the Traffic Message Channel (TMC), which uses ALERT-C as encoding protocol for TMC information. In this traffic information system all available roads are divided into links, i.e. discrete road sections. The geographical information associated with the links is stored within the system, e.g. by one of the above mentioned storage means. Traffic information relayed by the traffic information system, e.g. by TMC, lists traffic events each associated with a particular location, e.g. such a traffic information may contain the following information: "traffic event on the highway A3 in the direction from A to B between exits 8 and 9". The navigation system will then determine which links, i.e. road sections, are affected by the traffic event. In addition to the actual link in which the traffic event has occurred, these will also include all links after the last possible turn-off from the route leading to the location of the traffic event. In the given example this would mean all links on highway 8 in direction A to B which are located after exit 8 and before exit 9. Due to the traffic event these links will carry increased cost, meaning that traveling on those links will require additional time. When the system is triggered to calculate a new route, it will aim to find the route with the lowest cost and may thus arrive at an alternative route.

The route calculations require considerable system resources. They are typically carried out as background calculations meaning that they are being performed in the background while the system continuously determines the vehicle position and provides vehicle position information and route guidance information to the user. It is therefore desirable to minimize the necessity for background calculations.

The European patent EP 0 756 153 discloses a method for reducing background calculations. According to this method only traffic information about traffic events in a predetermined detection range in the vehicle's vicinity triggers a recalculation of a traffic event. According to this method, if a new route has been calculated due to a traffic event, the vehicle however is still on the first route, and incoming traffic information indicates that the traffic event has dissolved or disappeared, the system will again calculate and may suggest staying on said first route. The detection range according to this method is a zone with a fixed area around the vehicle position. However, such a system may still make many unnecessary calculations, e.g. when the vehicle is approaching the destination such that the destination is already within the detection range. Further, such a system is only flexible to suggest sticking to a first route (which in the absence of traffic events is by definition always the quickest route) upon dissolution of a traffice event as long as the vehicle has not left the first route.

It is therefore desirable to provide a navigation system, which avoids unnecessary calculations and can react as flexibly as possible to both emerging as well as dissolving traffic events.

### Summary of the invention

It is an object of the present invention to provide a navigation system and method for calculating a route to a destination, which makes optimal use of system resources and avoids unnecessary calculating operations.

In order to achieve these objects the invention provides a vehicular navigation system for calculating a route to a destination, comprising the features of claim 1.

According to an alternative embodiment of the invention the step of recalculating a route is only performed if the vehicle has been travelling on the alternative route and acquired traffic information shows that a traffic event has disappeared within a zone where the detection range and the destination range overlap. In this case the system comprises storage means for storing the information whether the vehicle is travelling on a first route or on a alternative route, and the means for recalculating the route are only triggered to recalculate the route if the vehicle has been travelling on the alternative route and acquired traffic information shows that a traffic event in said overlapping zone has disappeared.

The present invention is advantageous, because it will find an optimal route based on acquired information about existing, emerging as well as disappearing or recently disappeared traffic events.

The present invention has the further advantage that it filters out irrelevant traffic information and only uses relevant traffic information. Thereby, the amount of unnecessary information and distraction for the user is also reduced.

Another advantage of the system and method of the present invention lies in the fact, that it reduces the amount of information considered as the vehicle is approaching a destination. This in turn reduces the requirement for extensive calculations and improves efficient usage of system resources and performance.

In an embodiment of the invention, the detection range is a circular area around the present vehicle position with a predetermined radius.

In an embodiment of the invention, the destination range is a circular area, both the present vehicle position and the destination being opposed points on the circular area's circumference. Or, to put it into other words, the destination range is a circle whose diameter corresponds to the distance between the vehicle position and the destination and whose center is exactly halfway between the vehicle position and the destination. Thus, as the vehicle approaches the destination, the destination range becomes smaller.

According to another aspect of the invention, the vehicular navigation system only takes into consideration interurban traffic events for a new route calculation. According to a preferred embodiment of the present invention, an interurban traffic event is defined as a traffic event that takes place on a major road, such as a highway or freeway, having distinct entries and exits as opposed to a city street or rural road. According to this definiton an interuban traffic event may actually take place within city limits of a city if it takes place on a major road as defined above within city limits. For example such an interurban traffic event could take place on a city highway, city through way or belt way. Such a major road with discrete exits can be divided into "links" as defined above (i.e. distinct segments between exits) where as on city streets or rural roads links do not correspond to distinct exits or intersections as these streets or roads often have multiple intersections with other streets and roads and exits onto parking lots, gas stations and the like within short distances making it impractical to assign links to sections between intersections. According to an alternative embodiment of the present invention, a traffic event is defined as interurban if it takes place between areas of urban agglomeration. In this embodiment, the limits of areas of urban agglomeration can be defined in association with the stored map data.

In an embodiment of the invention, the vehicular navigation system of the present invention is operable to determine whether a particular traffic event is on said calculated first route and wherein a calculation for an alternative route is only commenced if such particular traffic event is on said calculated first route.

According to a further aspect of the invention, the vehicular navigation system can be operated in a manual mode of operation wherein if during operation an alternative route was calculated due to a detection of a traffic event, a user is prompted to decide whether the alternative route should be chosen by the system. The user may then choose the alternative route or may choose to remain on the original route. In this mode the user is always prompted before changing the current route due to a dynamic route guidance (DRG), i.e. an alternative route which is calculated in order to avoid a traffic event. In other words, the navigation system estimates the possibility of performing a detour from the current route, but before it is actually carried out (i.e. before the system starts to recalculate and/or give guidance for the detoured route), the user is asked to choose the alternative route or to continue on the original route. In an alternative embodiment of the invention, the vehicular navigation system can be operated in a manual mode of operation wherein the system first performs a DRG due to a traffic event occurrence and calculates an alternative route. The user is then prompted to choose or reject the already calculated route.

According to a preferred embodiment of the present invention, in the case that the vehicular navigation system is in the manual mode of operation, if during such operation the user has not chosen an alternative route calculated by the system and acquired traffic information has shown that a traffic event has disappeared within a zone where the detection range and a destination range overlap, a recalculation of the first route is not perfomed.

According to another embodiment the system in manual mode of operation will keep memory of a traffic event that the user has chosen to ignore (i.e. the user has chosen not to have DRG performed due to this traffic event). If the "ignored" traffic event disappears, it will not trigger a recalculation, even if it has disappeared in the overlapping zone. This will make the system more efficient as unnecessary recalculations for traffic events the user has chosen to ignore anyways are avoided. In an alternative embodiment of the system in manual mode, if the user has chosen to ignore a traffic event the system will not perform any DRG in response to a dissapeared traffic event. In this case it is assumed that the user has chosen to remain on the first route which was calculated to be the quickest route to the destination in the first place. Therefore, a disappeared traffic event would trigger an unnecessary recalculation which would again find the first route.

According to another aspect of the invention, the vehicular navigation system can be operated in an automatic mode of operation wherein if during operation an alternative route was calculated due to a detection of a traffic event, the alternative route is automatically chosen by the system. In this mode the system decides when to carry out a DRG. The user relies on the system to decide when to exchange an alternative route for the originally calculated route. In an alternative embodiment of a system in the automatic mode of operation, the system will perform a calculation of an alternative route (i.e. a detour) and verify the additional distance required for the detour. The system then chooses the detour only if the additional distance required by the detour as compared to the original route does not exceed a predetermined maximal detour distance. This detour distance can be predetermined during the initial configuration of the system. Alternatively it can be predetermined by the user before starting a journey to a destination.

According to another aspect of the present invention, a calculation for an alternative route or a recalculation of a route is not performed if a traffic event is less than a predetermined distance, e.g. 1 km, from the present vehicle position. It is an advantge of the present invention, that it will cease unnecessary calculations when a traffic event is approached that cannot be avoided.

The present invention further provides a method for calculating a route for a vehicle between a present vehicle position and a destination comprising the steps of claim 12.

According to an alternative embodiment of the invention the step of recalculating a route is only performed if the vehicle has been travelling on the alternative route and acquired traffic information shows that a traffic event has disappeared within a zone where the detection range and the destination range overlap. In this case the method comprises the step of storing the information whether the vehicle is travelling on a first route or on a alternative route.

The navigation system of the present invention calculates a route to a destination based on map information and traffic information. The map information can be stored within the system by means of a storage medium such as an optical disc (e.g. CD, DVD), magnetic disc, memory stick, flash card, or other suitable storage medium. In an embodiment of the invention, the navigation system uses satellite-based technology such as GPS to determine the vehicle position.

The traffic information can be transmitted to the system via electromagnetic waves such as radio waves, e.g. in the FM or short wave bands. In an embodiment of the invention, the navigation system can acquire traffic information provided by traffic information providers such as radio stations. These radio stations can use e.g. the radio data system (RDS) to silently transmit data to radios or navigation systems. Traffic information can be received via the Traffic Message Channel (TMC), which is an application of the radio data system (RDS), which uses ALERT-C as encoding protocol for TMC information.

The traffic information system may also provide information whether a traffic event blocks a road or not. A road blocking traffic event means that the driver cannot drive through because the road is blocked at that point. In an embodiment of the invention, the vehicle navigation system has a specific handling: the non-drive through links are handled as such and the links effected by such a traffic event are defined as a set of links that cannot be used to find an alternative route. If the road blocking traffic event cuts the only available way to reach the destination the vehicle navigation system will not find an alternative route to the destination.

A particular problem arises, as a vehicle approaches a traffic event and there is no further alternative route available. This is the case for example when a traffic event on a highway is detected by the system after the vehicle has passed the last exit on the highway before the traffic event. In such a case the navigation system would perform a calculation for a alternative route and find the same route as alternative route. The system would then find the same traffic event again and trigger a new calculation. This results in a endless repetition of calculations and can be viewed as a so called ping pong effect leading to a deadlock of the system. To avoid such a ping pong effect, it is another aspect of the invention to stop a calculation for an alternative route or a recalculation of a route if a traffic event is less than a fixed distance from the present vehicle position. This distance is in a range of 0.5 to 5 km. In an embodiment of the invention, the distance is 1 km. This aspect of the invention is independent of other aspects and features of the invention.

The invention is now described in more detail by means of embodiments and accompanying drawings.

### Brief Description of the Drawings

Fig. 1 is a schematic drawing showing the vehicle's detection range.
Fig. 2 is a schematic drawing showing the destination range.
Fig. 3 is a schematic drawing showing the eye range, i.e. the overlap of detection range and destination range.
Fig. 4 is a schematic drawing showing a route calculation with no traffic events in the system.
Fig. 5 is a schematic drawing showing a route calculation with traffic events in the system.
Fig. 6 is a schematic drawing showing a route calculation with a new traffic event coming into the system.
Fig. 7 is a schematic drawing showing a route calculation with a dissapeared traffic event.
Fig. 8 is a flow chart schematically illustrating the triggering of calculations when a traffic event dissapears according to an embodiment of the invention.
Fig. 9 is a schematic illustration showing an embodiment of the vehicle navigation system.

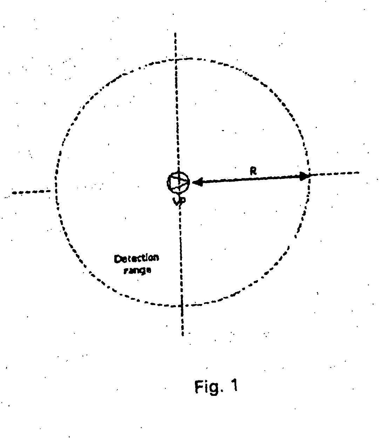

The vehicular navigation system of the present invention determines the present vehicle position. This can be achieved by use of satellite based technology, e.g. global positioning system (GPS), or other suitable systems. The vehicular navigation system defines a detection range around the vicinity of the vehicle. This range has a defined geometrical shape and a defined area. In an embodiment of the invention, the destination range is a circle with a fixed radius. In an embodiment of the invention, the vehicle position (VP) is at the center of the cirlce as shown in Fig. 1. However, other shapes, e.g. square, rectangle, ellipse, circular segment among others, are also possible. The size of the area is selected to be sufficiently large so that traffic events outside this area are not expected to have an immediate impact on the traffic situation at the present vehicle position. For example, the detection range may be a circular area with a radius of 50 km and the vehicle position at the center of the circle.

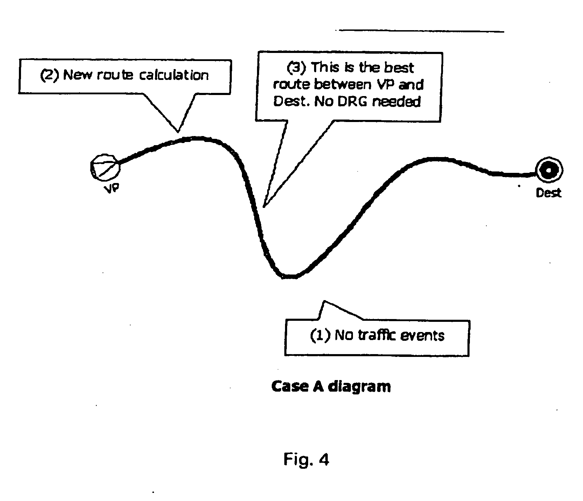

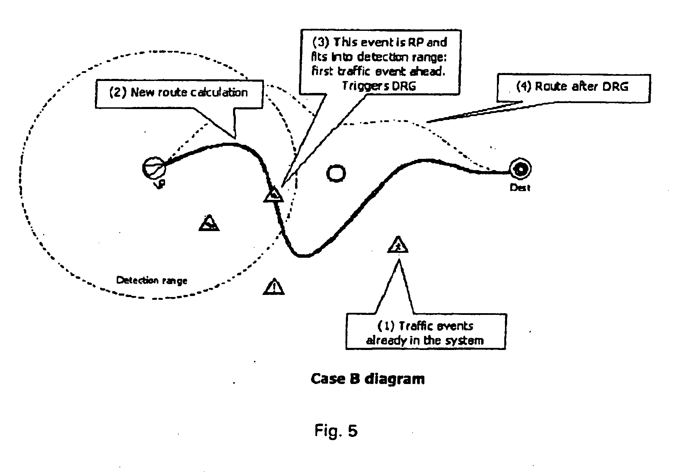

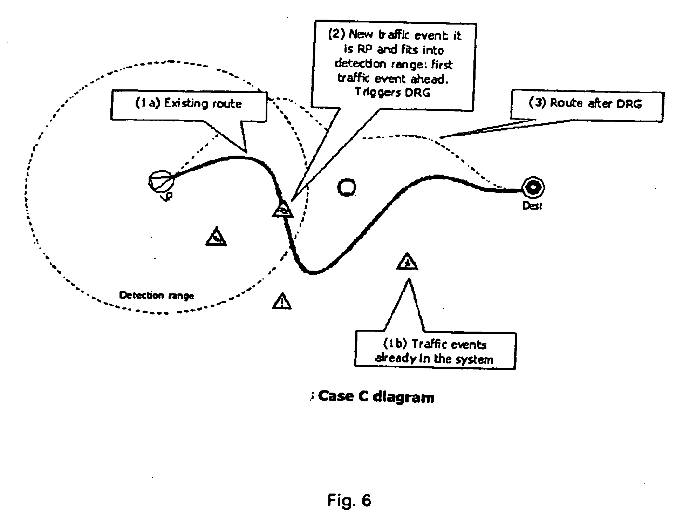

The vehicular navigation system of the present invention calculates a first route from the present vehicle position to the destination (shown for example in Fig. 4). This is done based on map information which is stored within the system. The information can be stored on optical, magnetical or other suitable storage media, e.g. CD, DVD or the like. The vehicular navigation system of the present invention has a means for acquiring traffic information from a traffic information system such as the Traffic Message Channel (TMC). Traffic information may be acquired by FM signals, other electromagnetic signals or other suitable means. If the vehicular navigation system of the present invention receives information about a traffic event, such as a traffic jam, blocked road or the like, the vehicular navigation system of the present invention first compares the location of the traffic event to the present vehicle position. If the traffic event is located within the detection range, a dynamic route guidance, i.e. the calculation of a new route based on traffic information, is triggered (shown for example in Fig. 5). The calculation of an alternative route is triggered by traffic events within the detection range which are already in the system at the onset of the journey (Fig. 5) and also by traffic events which appear as the vehicle is already on route (Fig. 6).

If the traffic event is located outside of the detection range, the calculation of a new route is not triggered, out of the following reasons: in this case the traffic event is quite far away from the present vehicle position and will not have an immediate impact on traffic (and therefore route guidance) in the vicinity of the vehicle; further, the traffic event may dissolve by the time the vehicle approaches the location of the traffic event; also, the traffic event may not be at all on the first route calculated the vehicular navigation system of the present invention; in all these cases an unnecessary calculation of an alternative route would be perfomed requiring valuable systems resources. Thus for traffic events outside the destination range, an unneccessary, complex calculation is avoided. If a traffic event persists and is indeed on the calculated first route, the vehicular navigation system of the present invention will trigger the calculation of an alternative route as the vehicle approaches this traffic event as soon as the traffic event is within the detection range.

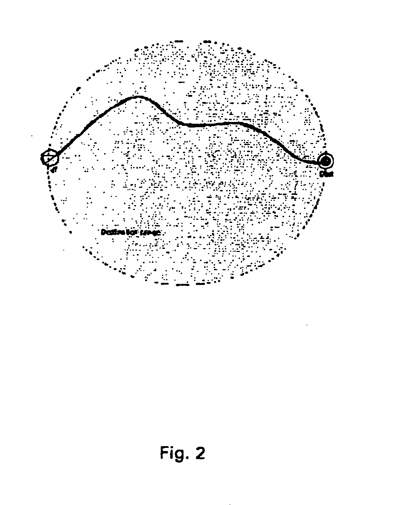

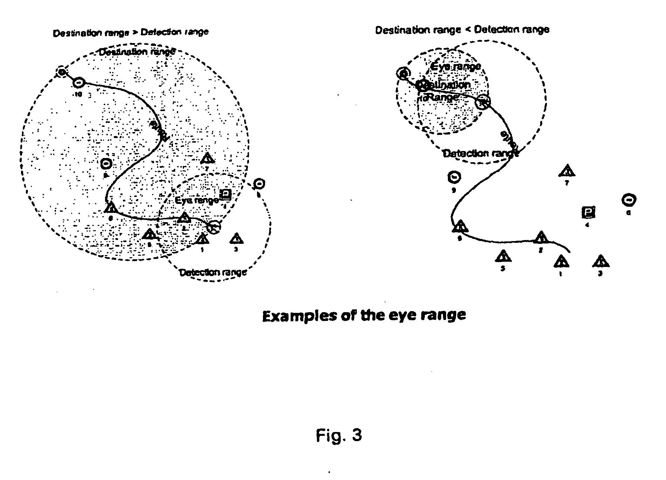

An area between the present vehicle position and the destination is defined as destination range. In an embodiment of the invention, the destination range is a circular area with the present vehicle position (VP) and the destination (Dest.) being on the circle's circumference at opposed ends (Fig. 2). Thus, as the vehicle approaches the destination, the destination range becomes smaller. If the vehicle is travelling on an alternative route, which was calculated by the system due to a traffic event in the detection range, and acquired traffic information shows that a traffic event has disappeared, the vehicular navigation system of the present invention determines whether the dissapeared traffic event is within a zone where the detection range and the destination range overlap. Due to its shape (in the case of circular destination and detection ranges) this overlapping zone is called the "eye range" (Fig. 3).

In Figures 3 to 7, traffic events are denoted by triangular symbols.

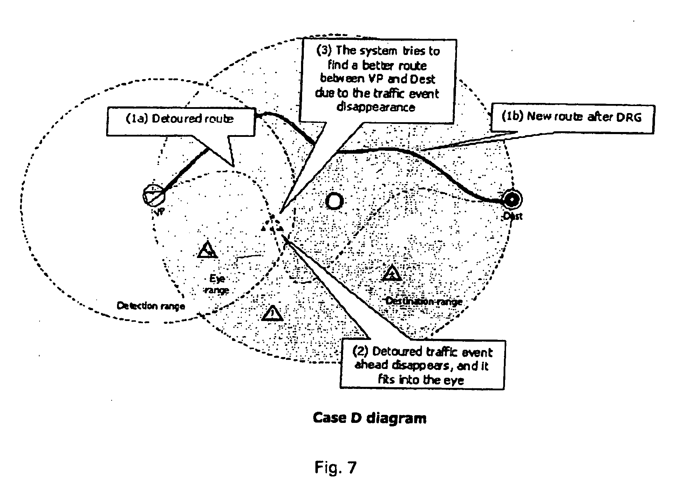

If a traffic event, which was located within the eye range, disappears, the vehicular navigation system of the present invention recalculates the route (Fig. 7). A traffic event may dissapear because e.g. a traffic jam dissolves and normal traffic flow is restored, a blocked road is reopened, etc.. The recalculation of the route may yield the result that the first route which was originally calculated may be the best route after the disappearance of a traffic event

If the disappeared traffic event is located outside of the eye range, the recalculation of a route is not triggered, out of the following reason: in this case the dissapeared traffic event is quite far away from the present vehicle position and will not have an immediate effect on traffic (and therefore route guidance) in the vicinity of the vehicle; also, the traffic event may not be at all on the first route calculated the vehicular navigation system of the present invention; in all these cases an unnecessary calculation of an alternative route would be perfomed requiring valuable systems resources. As the vehicle approaches the destination, the destination range and thus the eye range become continuously smaller and unnecessary recalculations near the end of the route are avoided. Thus for traffic events outside the eye range, an unneccessary, complex recalculation after disappearance of traffic events is avoided.

As a vehicle approaches a traffic event ahead there may be no further alternative route available. This is the case for example when a traffic event on a highway is detected by the system after the vehicle has passed the last exit on the highway before the traffic event. In such a case the navigation system would ordinarily perform a calculation for a alternative route and find the same route as alternative route. The system would then find the same traffic event again and trigger a new calculation. This results in a ping pong effect, a repetition of route calculations, leading to a deadlock of the system. To avoid such a ping pong effect, the vehicular navigation system of the present invention ceases to calculate for an alternative route or to recalculate route if a traffic event is less than 1 km distance from the present vehicle position.

### Examples

In order to illustrate the effects of the present invention more clearly, four exemplary case scenarios will be described in the following:

### Case A: User requests route calculation, no events in the system

This case is illustrated in Fig. 4. It is the usual case after system start-up: no traffic events are yet processed by the system. Also, when means for acquiring traffic information are disabled, the system does not process any traffic events. The system calculates the best route from the present vehicle position (VP) to the destination (Dest.). As no traffic events are registered, there is no calculation for an alternative route to be performed (i.e. no DRG is performed).

### Case B: User requests route calculation, traffic events already in the system

This case is illustrated in Fig. 5. The user requests the calculation of a new route or an alternative route and the system has already processed some traffic events. The system analyzes the traffic events. Only if the system detects traffic events on the route ahead (so called "traffic events ahead"), which are within the detection range, the process of calculating an alternative route, which detours the traffic events ahead, is triggered. In other words, DRG is triggered by acquired information about a traffic event ahead within the detection range.

### Case C: route is already calculated, a new traffic event comes into the system

This case is illustrated in Fig. 6. There is already a calculated first route in the system when the system acquires traffic information about a new traffic event. If this traffic event is within the detection range, a calculation for an alternative route is triggered. According to a preferred embodiment of the invention the system initially verifies whether the traffic event is on the route ahead (i.e. whether it is a "traffic event ahead") before commencing the calculation of an alternative route. In other words, DRG is triggered by the detection of a traffic event ahead within the detection range.

### Case D: route is already calculated, traffic event disappears

This case is illustrated by Fig. 7. In this case the vehicle is on an alternative route detouring a traffic event ahead which was on a first route and the traffic event dissapears. In this case it may be most convenient to go back to the first route. Since the system does not keep any memory of previously calculated routes there is no information in the system to determine whether the cuurent route is a detour as a result of DRG. The system will trigger the calculation of a new route if the dissapeared traffic event was located within the overlapping zone of detection range and destination range (i.e. the "eye range"). The system may arrive at the result that returning to or staying on the original route is better than the detour-route.

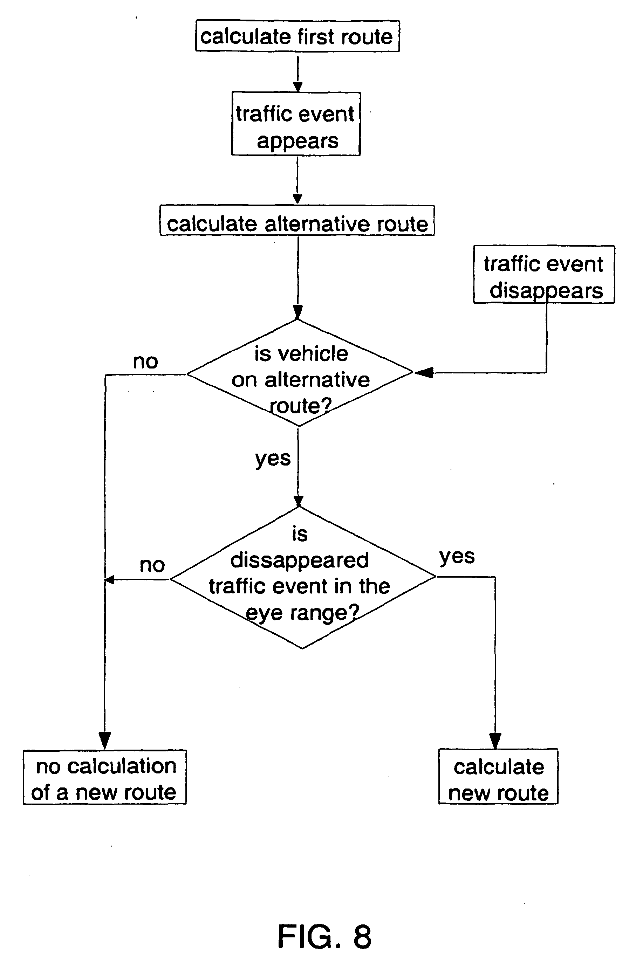

In Fig. 8, the sequence of decisions and calculations performed by the navigation system of the present invention is depicted schematically in a flow chart. This flow chart shows an embodiment of the invention where a route is recalculated if the vehicle has been travelling on the alternative route and acquired traffic information shows that a traffic event within said the eye range has disappeared.

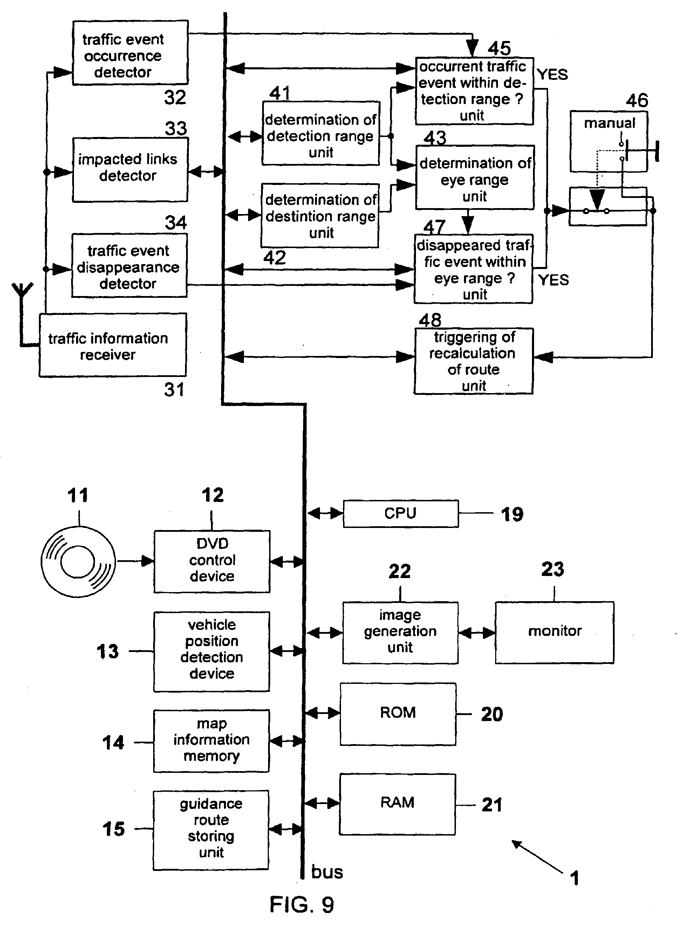

Fig. 9 is a diagram illustrating the construction of an embodiment of a navigation system 1 according to the present invention. The navigation system 1 includes a DVD-ROM 11, (or any of the above-mentioned other memory types), serving as a map storage medium for storing a digital map, a DVD control device 12 for reading out the predetermined map from the DVD-ROM 11 (in the following shortly named DVD), and a vehicle position detection device 13 for detecting a present vehicle position. The position detection device 17 has a range sensor for generating a pulse every time the vehicle passes through a predetermined distance, an angle sensor for measuring the driving direction of the vehicle, and a global positioning system (GPS) receiving unit. Further, the navigation system 1 includes a map information memory 14 for storing digital map information read from the DVD 11, a guidance route storing unit 15 for storing information related to the searched guidance route to the destination, optionally a voice guidance unit (not shown) for guiding the recommended traveling direction at an intersection by voice, optionally a remote control unit (not shown) for entering inputs such as menu selection, map scrolling, search for a route to the destination, or the like, and optionally as well a remote control interface (not shown). The navigation system 1 includes further a processor (CPU) 19 for controlling the overall operation of the navigation system in accordance with the stored programs, a ROM 20 for storing a guidance route search program, an arrow-guidance control program, and the like, a RAM 21 for storing processed results, an image generating unit 22 for generating a guidance image based on the map information and the guidance route data, and a monitor 23. The digital map information stored in the map information memory 14 includes data about links associated with different streets or highways. The navigation system 1 further includes a traffic information receiver 31 operable to receive information about traffic events, means 32 for detecting occurence of traffic events (i.e. of already existing or emerging traffic events) means 33 for detecting which links are affected by a traffic event, and means 34 for detecting dissapearance of a traffic event. The navigation system also includes means 41 for determining the detection range of the vehicle in relation to the vehicle position and means 42 for determining the destination range of the vehicle in relation to the present vehicle position and the destination location. The system further comprises means 43 for determining the eye range in relation to the detection range and the destination range.

If the system detects the occurence of a traffic event, the system determines if the traffic event is within the detection range in a unit 45 for determining whether the traffic event is within the detection range. In another embodiment the system will determine whether an occurring traffic event is within the detection range and whether it is on the calculated route. In case the occurring traffic event is within the detection range the user is prompted to decide whether he wishes to request a recalculation of the route if the system is switched to manual operation by a manual switch 46. If the system is switched to an automatical mode of operation, a unit 48 automatically triggers the recalculation of the route. In manual mode the unit 48 triggers the recalculation of the route after the user has inputted the command to search for an alternative route.

If the system detects the disappearance of a traffic event a unit 47 determines whether the disappeared traffic event is within the eye range. The unit 47 receives information about the eye range from the means 43 for determining the eye range. In case the disappeared traffic event is within the eye range the user is prompted to decide whether he wishes to request a recalculation of the route if the system is switched to manual operation by a manual switch 46. If the system is switched to an automatical mode of operation, a unit 48 automatically triggers the recalculation of the route. In manual mode the unit 48 triggers the recalculation of the route after the user has inputted the command to search for an alternative route.

In Fig. 9, different components of the vehicle navigation system are illustrated by means of different circuitry blocks performing the respective functions. In an alternative embodiment of the vehicle navigation system, the functions of most of the said components related to the present invention are implemented by software controlling the CPU 19.

## Claims

1. A vehicular navigation system for calculating a route to a destination, comprising:
a) means (13) configured to determine a present vehicle position (VP);
b) means (19, 20) for calculating a first route from the present vehicle position to the destination (DEST);
c) means (31) configured to acquire traffic information;
d) means (19, 20, 41, 45) configured to calculate an alternative route if acquired traffic information shows a traffic event within a detection range, the detection range being an area of predetermined size around the present vehicle position;
**characterized by**
e) means (42) configured to determine a destination range as a defined area between the present vehicle position (VP) and the destination (DEST) such that the destination range becomes smaller as the vehicle approaches the destination;
f) means (19, 20, 43) configured to trigger the recalculation of a route if traffic information shows that a traffic event has disappeared within a zone where the detection range and the destination range overlap, and which is configured to not trigger a recalculation of a route if traffic information shows that a traffic event has disappeared outside of the zone where the detection range and the destination range overlap.

2. A vehicular navigation system according to claim 1, further comprising:
means (21) configured to store information whether the vehicle is travelling on the first route or the alternative route;
wherein the means configured to recalculate a route is arranged for recalculating the route if the vehicle has been travelling on the alternative route and acquired traffic information shows that a traffic event has disappeared within the zone where the detection range and the destination range overlap.

3. A vehicular navigation system according to claim 1 or 2, wherein the detection range is a circular area around the present vehicle position with a predetermined radius.

4. A vehicular navigation system according to one of the claims 1 to 3, wherein the destination range is a circular area, both the present vehicle position and the destination being opposed points on the circular area's circumference.

5. A vehicular navigation system according to one of the claims 1 to 4, wherein a traffic event is an interurban traffic event.

6. A vehicular navigation system according to one of the claims 1 to 5, **characterized in that** the vehicular navigation system is operable to determine whether a particular traffic event is on said calculated first route and wherein a calculation for an alternative route is only commenced if such particular traffic event is on said calculated first route.

7. A vehicular navigation system according to one of the claims 1 to 6, **characterized in that** the vehicular navigation system can be operated in a manual mode of operation wherein if during operation an alternative route was calculated due to a detection of a traffic event, a user is prompted to decide whether the alternative route should be chosen by the system.

8. A vehicular navigation system according to claim 7, **characterized in that** if during operation the user has not chosen an alternative route calculated by the system and acquired traffic information has shown that a traffic event has disappeared which is in a zone where the detection range and a destination range overlap, a recalculation of the first route is not performed.

9. A vehicular navigation system according to one of the claims 1 to 8, **characterized in that** the vehicular navigation system can be operated in an automatic mode of operation wherein if during operation an alternative route was calculated due to a detection of a traffic event, the alternative route is automatically chosen by the system.

10. A vehicular navigation system according to claim 9, **characterized in that** the system chooses an alternative route only if an additional distance required by the alternative route as compared to the first route does not exceed a predetermined maximal distance.

11. A vehicular navigation system according to one of the claims 1 to 10 **characterized in that** a calculation for an alternative route or a recalculation of a route is not performed if a traffic event is less than a predetermined distance from the present vehicle position.

12. Method for calculating a route for a vehicle between a present vehicle position and a destination comprising the following steps:
a) determining a present vehicle position (VP);
b) calculating a first route from the present vehicle position to the destination (DEST);
c) acquiring traffic information;
d) calculating an alternative route if acquired traffic information shows a traffic event within a detection range, the detection range being an area of predetermined size around the present vehicle position;
**characterized by**
e) determining a destination range as a defined area between the present vehicle position and the destination such that the destination range becomes smaller as the vehicle approaches the destination;
f) triggering recalculation, of a route if acquired traffic information has shown that a traffic event has disappeared within a zone where the detection range and the destination range overlap, and not triggering a recalculation of a route if acquired traffic information has shown that a traffic event has disappeared outside of the zone where the detection range and the destination range overlap.

13. A method according to claim 12, wherein
a) determining the present vehicle position is performed by means for determining the present vehicle position;
b) calculating the first route from the present vehicle position to the destination is performed by an electronic calculating means;
c) acquiring traffic information is performed by means of receiving traffic information from a traffic information system;
d) calculating the alternative route if acquired traffic information shows a traffic event within a detection range is performed by electronic means for determining the detection range;
e) recalculating the route if acquired traffic information has shown that a traffic event has disappeared within a zone where the detection range and the destination range overlap is performed by electronic means for determining such overlapping zone.

14. A method according to claim 12 or 13, wherein after step d) the information that an alternative route has been calculated is stored and step e) is performed only if the vehicle is travelling on an alternative route.

15. A method according to one of the claims 12 to 14, wherein the detection range is a circular area around the present vehicle position with a predetermined radius.

16. A method according to one of the claims 12 to 15, wherein the destination range is a circular area, both the present vehicle position and the destination being opposed points on the circular area's circumference.

17. A method according to one of the claims 12 to 16, wherein a traffic event is an interurban traffic event.

18. A method according to one of the claims 12 to 17, comprising an additional step of determining whether the traffic event within the detection range is on said calculated first route and wherein a calculation for an alternative route is only commenced if such traffic event is on said calculated first route.

19. A method according to one of the claims 12 to 18, **characterized in that** a calculation for an alternative route or a recalculation of a route is not performed if a traffic event is less than a predetermined distance from the present vehicle position.

## Patentansprüche

1. Fahrzeugnavigationssystem zur Berechnung einer Route zu einem Ziel, aufweisend:
a) eine Einrichtung (13), die eingerichtet ist, eine gegenwärtige Fahrzeugposition (VP) zu bestimmen;
b) eine Einrichtung (19, 20) zur Berechnung einer ersten Route von der gegenwärtigen Fahrzeugposition zu dem Ziel (DEST);
c) eine Einrichtung (31), die eingerichtet ist, Verkehrsinformation zu erlangen;
d) eine Einrichtung (19, 20, 41, 45), die eingerichtet ist, eine alternative Route zu berechnen, falls die erlangte Verkehrsinformation ein Verkehrsereignis innerhalb eines Detektionsbereichs zeigt, wobei der Detektionsbereich ein Bereich einer vorbestimmten Größe um die gegenwärtige Fahrzeugposition herum ist;
**gekennzeichnet durch**
e) eine Einrichtung (42), die eingerichtet ist, einen Zielbereich als einen definierten Bereich zwischen der gegenwärtigen Fahrzeugposition (VP) und dem Ziel (DEST) in der Weise zu bestimmen, dass der Zielbereich kleiner wird so wie das Fahrzeug sich dem Ziel nähert;
f) eine Einrichtung (19, 20, 43), die eingerichtet ist, eine erneute Berechnung einer Route auszulösen, falls Verkehrsinformation zeigt, dass ein Verkehrsereignis innerhalb einer Zone, in der sich der Detektionsbereich und der Zielbereich überlappen, verschwunden ist, und welche eingerichtet ist, eine erneute Berechnung einer Route nicht auszulösen, falls Verkehrsinformation zeigt, dass ein Verkehrsereignis außerhalb der Zone verschwunden ist, in der sich der Detektionsbereich und der Zielbereich überlappen.

2. Fahrzeugnavigationssystem gemäß Anspruch 1, weiterhin aufweisend :
eine Einrichtung (21), die eingerichtet ist, Information zu speichern, ob sich das Fahrzeug auf der ersten Route oder der alternativen Route bewegt;
wobei die Einrichtung, die eingerichtet ist, eine Route erneut zu berechnen, eingerichtet ist, die Route erneut zu berechnen, falls das Fahrzeug sich auf der alternativen Route bewegt und Verkehrsinformation erlangt hat, die zeigt, dass ein Verkehrsereignis innerhalb der Zone, in der sich der Detektionsbereich und der Zielbereich überlappen, verschwunden ist.

3. Fahrzeugnavigationssystem gemäß Anspruch 1 oder 2, wobei der Detektionsbereich ein kreisförmiger Bereich um die gegenwärtige Fahrzeugposition herum mit einem vorbestimmten Radius ist.

4. Fahrzeugnavigationssystem nach einem der Ansprüche 1 bis 3, wobei der Zielbereich ein kreisförmiger Bereich ist, wobei sowohl die gegenwärtige Fahrzeugposition als auch das Ziel einander entgegengesetzte Punkte auf dem Umfang des kreisförmigen Bereichs sind.

5. Fahrzeugnavigationssystem nach einem der Ansprüche 1 bis 4, wobei ein Verkehrsereignis ein innerstädtisches Verkehrsereignis ist.

6. Fahrzeugnavigationssystem nach einem der Ansprüche 1 bis 5, **dadurch gekennzeichnet, dass** das Fahrzeugnavigationssystem betreibbar ist, um zu bestimmen, ob ein bestimmtes Verkehrsereignis auf der berechneten ersten Route ist, und wobei eine Berechnung einer alternativen Route nur begonnen wird, falls ein solches bestimmtes Verkehrsereignis auf der berechneten ersten Route ist.

7. Fahrzeugnavigationssystem nach einem der Ansprüche 1 bis 6, **dadurch gekennzeichnet, dass** das Fahrzeugnavigationssystem in einem manuellen Betriebsmodus betrieben werden kann, wobei falls während des Betriebs eine alternative Route berechnet wurde als Folge einer Detektion eines Verkehrsereignisses, ein Benutzer angehalten wird zu entscheiden, ob die alternative Route durch das System gewählt werden soll.

8. Fahrzeugnavigationssystem nach Anspruch 7, **dadurch gekennzeichnet, dass** falls während des Betriebs der Benutzer nicht eine durch das System berechnete alternative Route gewählt hat, und erhaltene Verkehrsinformation gezeigt hat, dass ein Verkehrsereignis, welches in einer Zone ist, wo sich der Detektionsbereich und der Zielbereich überlappen, verschwunden ist, eine erneute Berechnung der ersten Route nicht durchgeführt wird.

9. Fahrzeugnavigationssystem nach einem der Ansprüche 1 bis 8, **dadurch gekennzeichnet, dass** das Fahrzeugnavigationssystem in einem automatischen Betriebsmodus betrieben werden kann, wobei falls während des Betriebs eine alternative Route als Folge einer Detektion eines Verkehrsereignisses berechnet wurde, die alternative Route automatisch durch das System gewählt wird.

10. Fahrzeugnavigationssystem nach Anspruch 9, **dadurch gekennzeichnet, dass** das System eine alternative Route nur wählt, falls eine zusätzliche Distanz, welche durch die alternative Route benötigt wird im Vergleich zu der ersten Route, eine vorbestimmte maximale Distanz nicht überschreitet.

11. Fahrzeugnavigationssystem nach einem der Ansprüche 1 bis 10, **dadurch gekennzeichnet, dass** eine Berechnung einer alternativen Route oder eine erneute Berechnung einer Route nicht durchgeführt wird, falls ein Verkehrsereignis weniger als eine vorbestimmte Distanz von der gegenwärtigen Fahrzeugposition entfernt ist.

12. Verfahren zur Berechnung einer Route für ein Fahrzeug zwischen einer gegenwärtigen Fahrzeugposition und einem Ziel mit folgenden Schritten:
a) Bestimmung einer gegenwärtigen Fahrzeugposition (VP);
b) Berechnung einer ersten Route von der gegenwärtigen Fahrzeugposition zu dem Ziel (DEST);
c) Erlangung von Verkehrsinformation;
d) Berechnung einer alternativen Route, falls Erlangung der Verkehrsinformation ein Verkehrsereignis innerhalb eines Detektionsbereichs zeigt, wobei der Detektionsbereich ein Bereich von vorbestimmter Größe um die gegenwärtige Fahrzeugposition ist; **gekennzeichnet durch**
e) Bestimmung eines Zielbereichs als einen definierten Bereich zwischen der gegenwärtigen Fahrzeugposition und dem Ziel derart, dass der Zielbereich kleiner wird so wie das Fahrzeug sich dem Ziel nähert;
f) Auslösen einer erneuten Berechnung einer Route, falls erlangte Verkehrsinformation gezeigt hat, dass ein Verkehrsereignis innerhalb einer Zone, in der sich der Detektionsbereich und der Zielbereich überlappen, verschwunden ist, und Nicht-Auslösen einer erneuten Berechnung einer Route, falls erlangte Verkehrsinformation gezeigt hat, dass ein Verkehrsereignis außerhalb der Zone, in der sich der Detekionsbereich und der Zielbereich überlappen, verschwunden ist.

13. Verfahren nach Anspruch 12, wobei
a) das Bestimmen der gegenwärtigen Fahrzeugposition durch eine Einrichtung zur Bestimmung der gegenwärtigen Fahrzeugposition durchgeführt wird;
b) das Berechnen der ersten Route von der gegenwärtigen Fahrzeugposition zu dem Ziel durch eine elektronische Berechnungseinrichtung durchgeführt wird;
c) die Erlangung von Verkehrsinformation durch eine Einrichtung zum Empfangen von Verkehrsinformation von einem Verkehrsinformationssystem durchgeführt wird;
d) die Berechnung der alternativen Route, falls erlangte Verkehrsinformation ein Verkehrsereignis innerhalb eines Detektionsbereichs anzeigt, durch eine elektronische Einrichtung zur Bestimmung des Detektionsbereichs durchgeführt wird;
e) das erneute Berechnen der Route, falls erlangte Verkehrsinformation gezeigt hat, dass ein Verkehrsereignis innerhalb einer Zone, in der sich der Detektionsbereich und der Zielbereich überlappen, verschwunden ist, durch eine elektronische Einrichtung zur Bestimmung eines solchen überlappenden Bereichs durchgeführt wird.

14. Verfahren nach Anspruch 12 oder 13, wobei nach Schritt d) die Information, dass eine alternative Route berechnet wurde, gespeichert wird, und Schritt e) nur durchgeführt wird, falls das Fahrzeug sich auf der alternativen Route bewegt.

15. Verfahren nach einem der Ansprüche 12 bis 14, wobei der Detektionsbereich ein kreisförmiger Bereich um die gegenwärtige Fahrzeugposition herum mit einem vorbestimmten Radius ist.

16. Verfahren nach einem der Ansprüche 12 bis 15, wobei der Zielbereich ein kreisförmiger Bereich ist, wobei sowohl die gegenwärtige Fahrzeugposition als auch das Ziel entgegengesetzte Punkte auf dem Umfang des kreisförmigen Bereichs sind.

17. Verfahren nach einem der Ansprüche 12 bis 16, wobei ein Verkehrsereignis ein innerstädtisches Verkehrsereignis ist.

18. Verfahren nach einem der Ansprüche 12 bis 17, weiterhin aufweisend einen zusätzlichen Schritt des Bestimmens, ob das Verkehrsereignis innerhalb des Detektionsbereichs auf der berechneten ersten Route ist, und wobei eine Berechnung einer alternativen Route nur begonnen wird, falls ein solches Verkehrsereignis auf der berechneten ersten Route ist.

19. Verfahren nach einem der Ansprüche 12 bis 18, **dadurch gekennzeichnet, dass** eine Berechnung einer alternativen Route oder eine erneute Berechnung einer Route nicht durchgeführt wird, falls ein Verkehrsereignis weniger als eine vorbestimmte Distanz von der gegenwärtigen Fahrzeugposition entfernt ist.

## Revendications

1. Système de navigation pour véhicule, servant à calculer un itinéraire jusqu'à une destination, comportant :
a) un moyen (13) conçu pour déterminer une position immédiate (VP) du véhicule ;
b) un moyen (19, 20) pour calculer un premier itinéraire depuis la position immédiate du véhicule jusqu'à la destination (DEST) ;
c) un moyen (31) conçu pour acquérir des informations sur le trafic routier ;
d) des moyens (19, 20, 41, 45) conçus pour calculer un itinéraire de remplacement si les informations acquises sur le trafic routier indiquent un événement de circulation dans les limites d'un territoire de détection, le territoire de détection étant une zone de dimensions prédéterminées autour de la position immédiate du véhicule ;
**caractérisé par**
e) un moyen (42) conçu pour déterminer un territoire jusqu'à la destination, à savoir une zone définie entre la position immédiate (VP) du véhicule et la destination (DEST) de façon que le territoire jusqu'à la destination devienne plus petit à mesure que le véhicule se rapproche de la destination ;
f) des moyens (19, 20, 43) conçus pour lancer le calcul d'un itinéraire si des informations sur le trafic routier indiquent qu'un événement de circulation a pris fin dans un secteur où se chevauchent le territoire de détection et le territoire jusqu'à la destination, et qui sont conçus pour ne pas lancer de nouveau calcul d'itinéraire si des informations sur le trafic routier indiquent qu'un événement de circulation a pris fin hors de la zone où se chevauchent le territoire de détection et le territoire jusqu'à la destination.

2. Système de navigation pour véhicule selon la revendication 1, comportant en outre :
un moyen (21) conçu pour stocker des informations définissant si le véhicule roule sur le premier itinéraire ou sur l'itinéraire de remplacement ;
le moyen conçu pour recalculer un itinéraire étant destiné à recalculer l'itinéraire si le véhicule roulait sur l'itinéraire de remplacement et si les informations acquises sur le trafic routier indiquent qu'un événement de circulation a pris fin dans la zone où se chevauchent le territoire de détection et le territoire jusqu'à la destination.

3. Système de navigation pour véhicule selon la revendication 1 ou 2, dans lequel le territoire de détection est une zone circulaire, à rayon prédéterminé, autour de la position immédiate du véhicule.

4. Système de navigation pour véhicule selon l'une quelconque des revendications 1 à 3, dans lequel le territoire jusqu'à la destination est une zone circulaire, la position immédiate du véhicule et la destination étant des points opposés sur le pourtour de la zone circulaire.

5. Système de navigation pour véhicule selon l'une quelconque des revendications 1 à 4, dans lequel un événement de circulation est un événement de circulation interurbaine.

6. Système de navigation pour véhicule selon l'une quelconque des revendications 1 à 5, **caractérisé en ce que** le système de navigation pour véhicule sert à déterminer si, oui ou non, un événement de circulation particulier a lieu sur ledit premier itinéraire calculé, et dans lequel un calcul pour un itinéraire de remplacement n'est lancé que si cet événement de circulation particulier a lieu sur ledit premier itinéraire calculé.

7. Système de navigation pour véhicule selon l'une quelconque des revendications 1 à 5, le système de navigation pour véhicule étant **caractérisé en ce qu'**on peut le faire fonctionner dans un mode de fonctionnement manuel dans lequel, si, pendant son fonctionnement, un itinéraire de remplacement a été calculé suite à la détection d'un événement de circulation, un utilisateur est invité à décider si, oui ou non, un itinéraire de remplacement doit être choisi par le système.

8. Système de navigation pour véhicule selon la revendication 7, **caractérisé en ce que** si, pendant le fonctionnement, l'utilisateur n'a pas choisi d'itinéraire de remplacement calculé par le système et si des informations acquises sur le trafic routier ont indiqué qu'un événement de circulation a pris fin dans une zone où se chevauchent le territoire de détection et le territoire jusqu'à la destination, il n'est pas effectué de nouveau calcul du premier itinéraire.

9. Système de navigation pour véhicule selon l'une quelconque des revendications 1 à 8, le système de navigation pour véhicule étant **caractérisé en ce qu'**on peut le faire fonctionner dans un mode de fonctionnement automatique dans lequel, si, pendant le fonctionnement, un itinéraire de remplacement a été calculé suite à la détection d'un événement de circulation, l'itinéraire de remplacement est choisi automatiquement par le système.

10. Système de navigation pour véhicule selon la revendication 9, **caractérisé en ce que** le système ne choisit un itinéraire de remplacement que si une distance supplémentaire impliquée par l'itinéraire de remplacement en comparaison du premier itinéraire ne dépasse pas une distance maximale prédéterminée.

11. Système de navigation pour véhicule selon l'une quelconque des revendications 1 à 10, **caractérisé en ce qu'**un calcul pour un itinéraire de remplacement ou un nouveau calcul d'itinéraire n'est pas effectué si un événement de circulation a lieu à une distance inférieure à une distance prédéterminée par rapport à la position immédiate du véhicule.

12. Procédé pour calculer un itinéraire pour un véhicule entre une position immédiate du véhicule et une destination, comportant les étapes suivantes :
a) détermination d'une position immédiate (VP) du véhicule ;
b) calcul d'un premier itinéraire depuis la position immédiate du véhicule jusqu'à la destination (DEST) ;
c) acquisition d'informations sur le trafic routier ;
d) calcul d'un itinéraire de remplacement si les informations acquises sur le trafic routier indiquent un événement de circulation dans les limites d'un territoire de détection, le territoire de détection étant une zone de dimensions prédéterminées autour de la position immédiate du véhicule ;
**caractérisé par**
e) la détermination d'un territoire jusqu'à la destination, à savoir une zone définie entre la position immédiate du véhicule et la destination de façon que le territoire jusqu'à la destination devienne plus petit à mesure que le véhicule se rapproche de la destination ;
f) un nouveau calcul d'itinéraire si des informations acquises sur le trafic routier ont indiqué qu'un événement de circulation a pris fin dans un secteur où se chevauchent le territoire de détection et le territoire jusqu'à la destination, et l'absence de lancement d'un nouveau calcul d'itinéraire si des informations acquises sur le trafic routier ont indiqué qu'un événement de circulation a pris fin hors de la zone où se chevauchent le territoire de détection et le territoire jusqu'à la destination.

13. Procédé selon la revendication 12, dans lequel
a) la détermination de la position immédiate du véhicule est effectuée par un moyen pour déterminer la position immédiate du véhicule ;
b) le calcul du premier itinéraire depuis la position immédiate du véhicule jusqu'à la destination est effectué par un moyen de calcul électronique ;
c) l'acquisition d'informations sur le trafic routier est effectuée à l'aide de la réception d'informations sur le trafic routier fournies par un système d'information sur le trafic routier ;
d) le calcul d'un itinéraire de remplacement si les informations acquises sur le trafic routier indiquent un événement de circulation dans les limites d'un territoire de détection est effectué par un moyen électronique pour déterminer le territoire de détection ;
e) le nouveau calcul d'itinéraire si des informations acquises sur le trafic routier ont indiqué qu'un événement de circulation a pris fin dans un secteur où se chevauchent le territoire de détection et le territoire jusqu'à la destination est effectué par un moyen électronique pour déterminer ce secteur de chevauchement.

14. Procédé selon la revendication 12 ou 13, dans lequel, après l'étape d), l'information selon laquelle un itinéraire de remplacement a été calculé est mémorisée et l'étape e) n'est exécutée que si le véhicule roule alors sur un itinéraire de remplacement.

15. Procédé selon l'une quelconque des revendications 12 à 14, dans lequel le territoire de détection est une zone circulaire, à rayon prédéterminé, autour de la position immédiate du véhicule.

16. Procédé selon l'une quelconque des revendications 12 à 15, dans lequel le territoire jusqu'à la destination est une zone circulaire, la position immédiate du véhicule et la destination étant des points opposés sur le pourtour de la zone circulaire.

17. Procédé selon l'une quelconque des revendications 12 à 16, dans lequel un événement de circulation est un événement de circulation interurbaine.

18. Procédé selon l'une quelconque des revendications 12 à 17, comportant une étape supplémentaire de détermination de ce que, oui ou non, l'événement de circulation dans le territoire de détection a lieu sur ledit premier itinéraire calculé, et dans lequel un calcul pour un itinéraire de remplacement n'est lancé que si cet événement de circulation a lieu sur ledit premier itinéraire calculé.

19. Procédé selon l'une quelconque des revendications 12 à 18, **caractérisé en ce qu'**un calcul pour un itinéraire de remplacement ou un nouveau calcul d'itinéraire n'est pas effectué si un événement de circulation a lieu à une distance inférieure à une distance prédéterminée par rapport à la position immédiate du véhicule.
